# EUROPÄISCHE PATENTSCHRIFT

(11) **EP 2 853 744 B1**
(45) Veröffentlichungstag und Bekanntmachung des Hinweises auf die Patenterteilung: **04.11.2015**
(21) Anmeldenummer: 14182056.3
(22) Anmeldetag: 25.08.2014
(51) Int. Cl.: F04B 39/04

(54) **Kompressor mit und Verfahren zur Spülung des Kompressorgehäuses mit Spülgas**
Compressor with and method for flushing the compressor housing with flushing gas
Compresseur et procédé de rinçage d'un carter de compresseur à l'air de gaz de rinçage

(30) Priorität: 23.09.2013 AT 506082013
(43) Veröffentlichungstag der Anmeldung: 01.04.2015
(73) Patentinhaber: Hoerbiger Kompressortechnik Holding GmbH, 1220 Wien (AT)
(72) Erfinder: Hold, Christian, 2102 Bisamberg (AT); Kornfeld, Matthias, 2340 Mödling (AT)
(74) Vertreter: Patentanwälte Pinter & Weiss OG

(56) Entgegenhaltungen:
- WO-A1-2010/079227
- DE-A1- 19 709 206
- DE-C1- 4 122 451
- FR-A- 553 863
- US-A- 3 685 840

## Beschreibung

Die gegenständliche Erfindung betrifft einen Kolbenkompressor mit einer in einem Kompressorgehäuse angeordneten Dichtanordnung zur Abdichtung einer hin- und hergehenden Kolbenstange des Kolbenkompressors mit einem ersten und zweiten Dichtelement, die in einer Ausnehmung der Dichtanordnung axial beabstandet angeordnet sind, wobei eine Zuleitung für ein Dichtmedium vorgesehen ist, die mit der Ausnehmung verbunden ist und die Dichtelemente durch das Dichtmedium druckbeaufschlagt sind, und wobei ein Hydraulikaggregat zur Erzeugung des Drucks des Dichtmediums vorgesehen ist, sowie ein Verfahren zum Spülen eines Kompressorgehäuses.

In einem Kolbenkompressor ist der Raum mit hohem Druck, z.B. der Arbeitsdruck im Zylinder des Kompressors, gegenüber einem Raum mit niedrigem Druck, z.B. der Atmosphärendruck im Kurbelgehäuse des Kompressors, entlang der Kolbenstange abzudichten. Dazu werden in bekannter Weise sogenannte Dichtpackungen eingesetzt, die zwischen der hin- und herbewegten Kolbenstange des Kolbenkompressors und einem feststehenden Maschinenteil, in der Regel das Kompressorgehäuse, abdichten. Eine solche Dichtpackung umfasst in der Regel mehrere axial hintereinander angeordnete Packungsringe bzw. Packungsring-Kombinationen. Am häufigsten werden Kombinationen aus einem radial geschnittenen und einem tangential geschnittenen Packungsring verwendet, wie z.B. aus der EP 1 146 264 A2 hervorgehend. Daneben werden auch segmentierte Ringdesigns, bei denen ein Packungsring aus mehreren Ringsegmenten zusammengesetzt wird, eingesetzt, wie z.B. aus der US 4 350 349 A bekannt. Solche Abdichtungen sind jedoch keine zu 100% dichten Systeme, sondern weisen immer eine gewisse Leckagemenge des Arbeitsmediums des Kompressors auf, die durch die Dichtpackung entweicht.

Um das Problem der Leckage zu reduzieren, wurde in der WO 2010/079227 A1 bereits vorgeschlagen, als Abdichtung zwei axial beabstandete Dichtelemente zu verwenden, zwischen denen ein Dichtmedium, z.B. Öl, mit hohem Druck eingebracht wird, wodurch die Dichtelemente zur Abdichtung gegen vorgesehene Dichtflächen in der Dichtpackung und gegen die Kolbenstange gepresst werden. Auf diese Weise wird eine Dichtmediumbarriere geschaffen, die die Leckage des Arbeitsmediums des Kompressors, wie z.B. Luft oder Erdgas, entlang der Kolbenstange zumindest reduziert, im Idealfall und angestrebt sogar eliminiert. Allerdings kann es dabei zu einer Leckage von Dichtmedium zwischen Dichtelement und Kolbenstange kommen, hauptsächlich aufgrund des Dichtmediumfilms der an der Oberfläche der hin- und hergehenden Kolbenstange haftet und damit aus der Abdichtung transportiert und beim entgegengesetzten Hub der Kolbenstange vom Dichtelement abgestreift wird. Das abgestreifte Dichtmedium wird gesammelt und über eine Leckageleitung in ein Dichtmediumreservoir rückgführt.

Obwohl die Dichtanordnung mit einer Dichtmediumbarriere eine Leckage von Arbeitsmedium entlang der Kolbenstange weitestgehend unterbindet, kann es an anderen Stellen im Kompressor oder in der Dichtanordnung zu einer Arbeitsmediumleckage kommen. Die Dichtanordnung besteht in der Regel aus einer Anzahl von axial nebeneinander angeordneten Kammerscheiben, die mittels durchgehender Bolzen zusammengehalten werden. Die Dichtanordnung wird als eine Baueinheit in das Kompressorgehäuse eingesetzt und befestigt. Die Stirnflächen der Kammerscheiben dienen dabei gleichzeitig als Dichtflächen. Zwischen Kompressorgehäuse und Dichtanordnung werden Dichtungen eingesetzt. Sowohl durch die Dichtflächen zwischen Kammerscheiben, als auch durch die Dichtungen können aber geringe Mengen an Arbeitsmedium entweichen, die sich im Kompressorgehäuse, z.B. im Kurbelkasten oder einem Distanzstück zwischen Kurbelkasten und Zylinder, ansammeln können. In einer gegenständlichen Dichtanordnungen wird mit einer Arbeitsmediumleckage von 5nl/h gerechnet, was bei den langen Laufzeiten von Kompressoren über eine lange Zeitdauer auch zu einer hohen Konzentration von Arbeitsmedium im Kompressorgehäuse führen kann. Speziell bei giftigen (z.B. Ammoniak) oder explosiven (z.B. Wasserstoff, Erdgas) Arbeitsmedien kann das aber ein großes Problem darstellen und ist daher zu unterbinden. Insbesondere ist die Ausbildung eines explosiven Gasgemisches im Kompressorgehäuse durch Arbeitsmediumleckage zu verhindern. Die Konzentration von Arbeitsmedium im Kompressorgehäuse ist daher aus Sicherheitsgründen unterhalb einer bestimmten Konzentrationsgrenze zu halten.

Oftmals werden daher in Kompressoren Entlüftungsöffnungen im Kompressorgehäuse, gegebenenfalls in Kombination mit Spülgaszuführungen, zum erzwungenen Durchspülen des Kompressorgehäuses mit einem inerten Gas (z.B. Stickstoff), vorgesehen. Das bedingt aber natürlich zwangsweise das Vorsehen eines separaten Spülgaskreislaufes mit entsprechenden Aggregaten und Spülgasspeichern, was unerwünschten apparativen und steuerungstechnischen Mehraufwand verursacht. Durch das Spülen mit Spülgas kann es auch zu einer Vermischung von Spülgas und Arbeitsmedium und zum Entweichen des Gemisches nach außen über die Entlüftungsöffnung kommen. Aufgrund von Dichteunterschieden zwischen Spülgas und Arbeitsmedium kann aber auch unverdünntes Arbeitsmedium über die Entlüftungsöffnung nach außen entweichen, was ebenfalls zu verhindern ist. Kompressoren mit einem derartigen Spülsystem nachzurüsten bedingt größere Umbauten am Kompressor, was ein solches Nachrüsten aufwendig und schwierig macht.

Es ist daher eine Aufgabe der gegenständlichen Erfindung einen Kompressor mit einer Dichtanordnung in Form einer Dichtmediumbarriere, und ein zugehöriges Verfahren, anzugeben, bei dem auf einfache Weise die Ansammlung von Arbeitsmedium im Kompressorgehäuse verhindert werden kann.

Diese Aufgabe wird erfindungsgemäß dadurch gelöst, dass im Hydraulikaggregat ein Lüfter und ein Dichtmediumbehälter, der teilweise mit Dichtmedium gefüllt ist, vorgesehen sind, wobei der Lüfter Luft aus dem freien Raum des Dichtmediumbehälters ansaugt und der freie Raum im Dichtmediumbehälter über eine Leitung mit dem Kompressorgehäuse verbunden ist und am Kompressorgehäuse eine Öffnung zum Verbinden des Inneren des Kompressorgehäuses mit einem Spülgasreservoir, vorzugsweise die Umgebung des Kompressors, vorgesehen ist. Der im Hydraulikaggregat vorhandene Lüfter, der an sich zur Kühlung des Hydraulikaggregates oder des Dichtmediums benutzt wird, wird damit gleichzeitig zur Erzeugung eines Unterdrucks im Kompressorgehäuse, bzw. eines Teils davon, genutzt, wobei der erzeugte Unterdruck auf einfache Weise zur permanenten oder zeitweisen Spülung des Kompressorgehäuses mit Spülgas, vorzugsweise Umgebungsluft, genutzt wird. Die Ansammlung von Arbeitsmedium des Kompressors im Kompressorgehäuse kann auf diese Weise, auch bei langen Laufzeiten, sicher unterhalb einer vorgegebenen Konzentrationsgrenze gehalten werden.

Wenn im Hydraulikaggregat ein Lüfterraum vorgesehen ist, in dem der Lüfter angeordnet ist, und der Lüfterraum mit dem freien Raum im Dichtmediumbehälter verbunden ist, kann eine kompakte Ausführung des Hydraulikaggregates erzielt werden. Dabei ist es auch vorteilhaft, wenn der Dichtmediumbehälter durch ein Abtrennteil abgeschlossen ist und im Abtrennteil eine Ausnehmung angeordnet ist, über die der Lüfter Luft aus dem Dichtmediumbehälter ansaugt.

Die Leitung kann hierzu als Drainageleitung für Dichtmedium oder als separate Saugleitung ausgeführt sein, wobei insbesondere die Ausgestaltung mit Drainageleitung bevorzugt wird, da eine solche Drainageleitung ohnehin vorhanden ist und damit gleichzeitig auch zum Spülen des Kompressorgehäuses genutzt werden kann.

Das Dichtmedium lässt sich effektiv kühlen, wenn ein Wärmetauscher vorgesehen ist, durch den Dichtmedium aus dem Dichtmediumbehälter umgewälzt wird und der vom vom Lüfter ausgeblasenen Luftstrom überströmt wird.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine schematische Darstellung eines erfindungsgemäßen Kolbenkompressors,
Fig.2 eine Ausführung einer Dichtanordnung des Kolbenkompressors und
Fig.3 eine schematische Darstellung des Hydraulikaggregats eines solchen Kolbenkompressors.

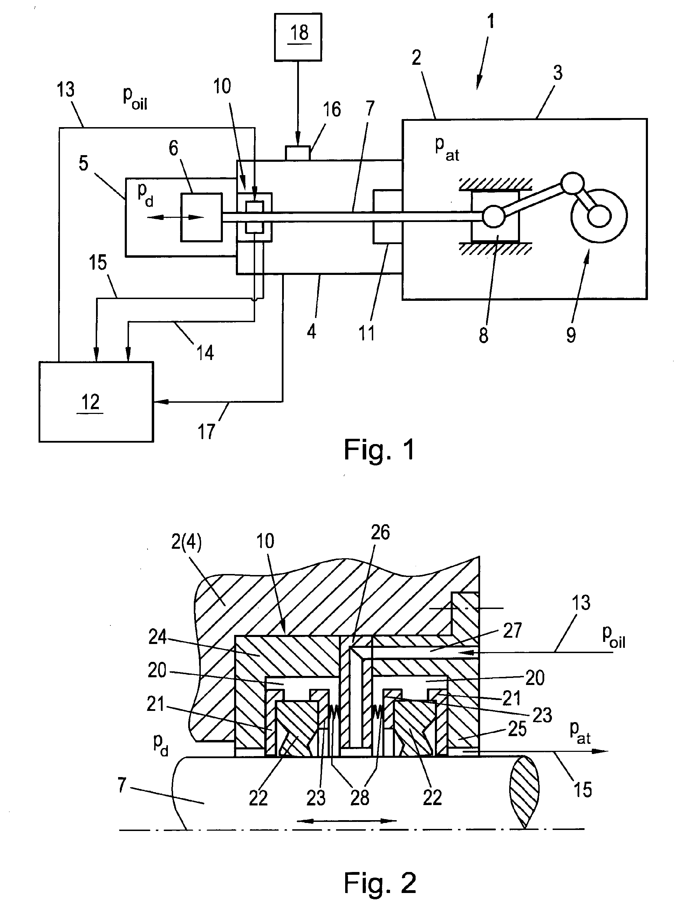

Der in Fig.1 schematisch dargestellte Kolbenkompressor 1 besteht aus einem Kompressorgehäuse 2, umfassend einen Kurbelkasten 3 und ein Distanzstück 4, an dem ein Zylinder 5 angeordnet ist. Im Zylinder 5 wird in bekannter Weise der Kolben 6 hin- und herbewegt. Der Kolben 6 ist mit der hin- und herbewegten Kolbenstange 7 verbunden, die über einen Kreuzkopf 8 mit dem Kurbeltrieb 9 verbunden ist.

Zur Abdichtung der Kolbenstange 7 ist eine erste Dichtanordnung 10 in Form einer Dichtmediumbarriere vorgesehen. Die erste Dichtanordnung 10 ist hier im Distanzstück 4, angeordnet. Zwischen Distanzstück 4 und Kurbelkasten 3 kann eine zweite Dichtanordnung 11 angeordnet sein, z.B. in Form von aus dem Stand der Technik bekannten, axial neben einander angeordneten, radial und tangential geschnitten oder segmentierten Dichtringen. Die Dichtanordnung 11 kann dabei auch Abstreifringe umfassen, mit denen Kurbelkastenöl von der Kolbenstange 7 abgestreift werden kann. Ebenso kann auch ein zweites Distanzstück vorgesehen sein, z.B. zwischen Distanzstück 4 und Kurbelkasten 3, wobei zur Abdichtung auch eine weitere Dichtanordnung im weiteren Distanzstück vorgesehen sein kann.

Die erste Dichtanordnung 10 wird unter Bezugnahme auf die Fig.2 näher erläutert. Die Dichtanordnung 1 dient zur Abdichtung der axial hin- und hergehenden Kolbenstange 7 des Kolbenkompressors 1 gegenüber einer abzudichtenden Druckdifferenz p_{d} - pₐₜ eines im Zylinder 5 befindlichen Arbeitsmediums des Kompressors, z.B. die Differenz von Zylinderdruck p_{d} und Druck pₐₜ im Kurbelkasten 3 bzw. im Distanzstück 4. Die Dichtanordnung 10 ist im Kompressorgehäuse 2, hier z.B. im Gehäuse des Distanzstückes 4, angeordnet und dichtet zwischen dem Kompressorgehäuse 2 und der bewegten Kolbenstange 7. Die Dichtanordnung 10 umfasst im gezeigten Beispiel zwei L-förmige Kammerscheiben 24, 25, die im dargestellten Ausführungsbeispiel axial durch eine Trennscheibe 26 getrennt sind. Die L-förmigen Kammerscheiben 24, 25 und die Trennscheibe 26 sind axial aneinander anliegend angeordnet und radial von der Kolbenstange 7 beabstandet, um ein Anstreifen der Kolbenstange 7 an den Kammerscheiben 24, 25 bzw. der Trennscheibe 26 zu verhindern, und um eine Beweglichkeit der Kolbenstange 7 quer zur Hubbewegung (angedeutet durch den Doppelpfeil) zu ermöglichen. Die Orientierungen "axial" und "radial" sind auf die Orientierung der Kolbenstange 7 bezogen, also axial in Richtung der Längsachse der Kolbenstange 7 und radial quer dazu. Im einfachsten Fall kann die Trennscheibe 26 aber auch weggelassen werden. Es sind aber auch andere Ausführungen, z.B. mit T-förmigen Trennscheiben oder einer L-förmigen Scheibe und einer zylindrischen Scheibe, denkbar. An einer Kammerscheibe 25 kann radial außen auch ein Flansch vorgesehen sein, mittels dem die Dichtanordnung 10, z.B. mit über dem Umfang verteilt angeordneten Schrauben, am Kompressorgehäuse 2 befestigt werden kann. Die Kammerscheiben 24, 25, und gegebenenfalls die Trennscheibe 26 oder andere Scheiben, können in bekannter Weise durch nicht dargestellte, durchgehende Bolzen zusammengehalten werden. Durch diese Anordnung entsteht zwischen den L-förmigen Kammerscheiben 24, 25, gegebenenfalls der Trennscheibe 26, und der Kolbenstange 7 eine Ausnehmung 20, in der zwei Dichtelemente 22 axial beabstandet angeordnet sind. Ein Dichtelement 22 ist vorzugsweise als einteiliger, in Umfangsrichtung ungeschnittener Dichtring ausgeführt

Die Dichtelemente 22 können axial an den axialen Begrenzungswänden der Kammerscheiben 24, 25 anliegen. Alternativ können Stützringe 21 vorgesehen sein, an denen die Dichtelemente 22 axial anliegen, wobei die Stützringe 21 jeweils axial an der axialen Begrenzungswand der Ausnehmung 20, hier am radialen Schenkel der Kammerscheibe 24, 25, anliegen. Die Stützringe 21 verhindern ein, durch den hohen, auf das Dichtelement 22 wirkenden Druck, mögliches Hineinextrudieren des Dichtelementes 22 in den Ringspalt zwischen Kammerscheibe 24, 25 und Kolbenstange 7.

In der Dichtanordnung 10 ist weiters eine Zuleitung 27 vorgesehen, die mit der Ausnehmung 20 verbunden ist und über die ein Dichtmedium, wie z.B. ein Öl, unter einem Druck pₒᵢₗ. der größer ist als der abzudichtende Druck p_{d}, in die Ausnehmung 20 zugeführt werden kann. Im Falle eines sich dynamisch ändernden Arbeitsdruckes p_{d} muss natürlich gelten pₒᵢₗ > p_{d,max}, oder der Druck des Dichtmediums wird dynamisch an den Druck des Arbeitsmediums angepasst, sodass immer gilt pₒᵢₗ > p_{d}. Das Dichtmedium wirkt radial außen und axial auf die Dichtelemente 22, die somit radial nach innen an die Kolbenstange 7 und axial an die Stützringe 21 bzw. an die Begrenzungswände der Ausnehmung 20 gedrückt werden und somit abdichten. Dadurch entsteht eine Dichtmediumbarriere, die eine Leckage des abzudichtenden gasförmigen Arbeitsmediums des Kolbenkompressors 1 entlang der Kolbenstange 7 verhindert.

Das Dichtelement 22 liegt mit seiner radial inneren Umfangsfläche, bzw. mit einem Teil davon, an der Kolbenstange 7 an, gegen die es mit dem hohem Druck pₒᵢₗ des Dichtmediums gedrückt wird. Es entstehen dadurch hohe Reibbelastungen, denen das Dichtelement 22 ausreichend lange widerstehen muss. Das Dichtelement 22 wird daher bevorzugt aus einem tribologisch günstigen, aber gleichzeitig mechanisch hochfesten und temperaturstabilem Material, vorzugsweise Kunststoff, wie z.B. modifizierte Polyetheretherketon (PEEK) oder Polyphenylensulfid (PPS) Werkstoffe, gefertigt. Auf das Dichtelement 22 wirken dabei durch den Druck pₒᵢₗ des Dichtmediums Kräfte, die das Dichtelement 22 axial gegen die Begrenzungswand der Ausnehmung 20 bzw. gegen den Stützring 11 und radial gegen die Kolbenstange 7 pressen. Dadurch können bei einem Dichtmediumdruck pₒᵢₗ von ca. 50bar zwischen Dichtelement 22 und Kolbenstange 7 Reibkräfte in der Höhe von einigen hundert Newton, typischerweise zwischen 100N und 250N, und Reibleistungen in der Höhe von einigen hundert Watt, typischerweise zwischen 500W und 1000W, entstehen.

An der dem Stützring 21 bzw. der axialen Begrenzungswand der Ausnehmung 20 gegenüberliegenden axialen Stirnfläche des Dichtelements 22 kann ein Federring 23 anliegen, auf den ein Federelement 28 in axialer Richtung wirkt, um das Dichtelement 22 axial gegen die Begrenzungswand der Ausnehmung 20 vorzuspannen. Das Federelement 28 kann dabei zwischen dem Federring 23 und einem axialen Anschlag in der Dichtanordnung 10, hier z.B. die Trennscheibe 26, angeordnet sein. Das Federelement 28 ist z.B. in Form von mehreren, über den Umfang verteilten Spiralfedern ausgeführt. Damit wird die Lage des Dichtelements 22 bei Stillstand des Kolbenkompressors 1 definiert, um ein kontrolliertes Anfahren des Kolbenkompressors 1 zu ermöglichen. Der Federring 23 kann dabei auch über eine Schulter an der radial äußeren Umfangsfläche des Dichtelementes 22 anliegen, um die radiale Position des Federringes 23 festzulegen. Der Federring 23 ist bevorzugt als starrer, ungeteilter, z.B. metallischer, Ring ausgeführt.

Zusätzlich können in der Dichtanordnung 10 neben den notwendigen Dichtelementen 22 auch noch weitere Dichtelemente oder Abstreifringe angeordnet sein, auch in eigenen Kammerscheiben, wie z.B. in der EP 2 489 907 A1 oder der WO 2010/079227 A1 beschrieben.

Kurbelkastenseitig kann in der Dichtanordnung 10 auch eine Drainageleitung 15 münden, um von der Kolbenstange 7 abgestreiftes Dichtmedium abzuführen, wie in Fig.2 angedeutet und nachfolgend noch näher beschrieben wird.

Zur Versorgung der Dichtanordnung 10 ist ein Hydraulikaggregat 12 vorgesehen, mittels dem das Dichtmedium über eine, mit der Zuleitung 27 in der Dichtanordnung 10 verbundene, Dichtmediumleitung 13 der Dichtanordnung 10 mit hohem Druck pₒᵢₗ zugeführt wird. Über eine Abführleitung 14 kann, z.B. in einem optionalen Umwälzbetrieb für das Dichtmedium, das Dichtmedium wieder dem Hydraulikaggregat 12 rückgeführt werden.

Durch die hin- und hergehende Kolbenstange 7 wird der auf der Kolbenstange 7 haftende Dichtmediumfilm aus der Dichtanordnung 10 hinausbefördert und von der Kolbenstange 7 abgestreift, z.B. mittels eigener, in der Dichtanordnung 10 angeordneter Abstreifringe oder durch das Dichtelement 22 selbst. Das abgestreifte Dichtmedium wird in der Dichtanordnung 10 gesammelt und über eine Drainageleitung 15 zum Hydraulikaggregat 12 rückgeführt.

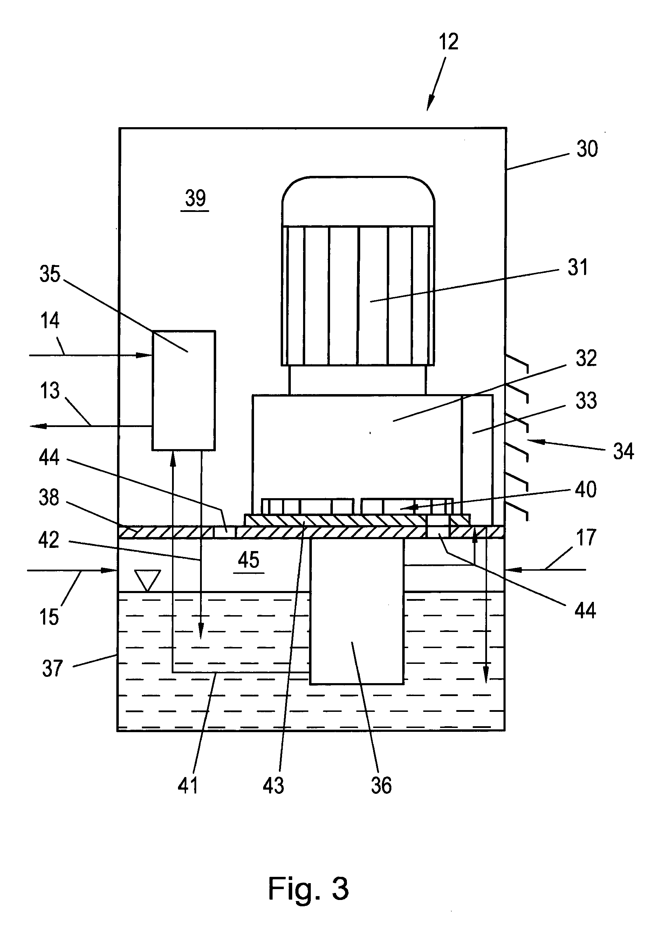

Mit Bezugnahme auf Fig.3 wird das Hydraulikaggregat 12 näher beschrieben. Ein Antriebsmotor 31 treibt eine Hydraulikpumpe 36 an, die in einem Dichtmediumbehälter 37 angeordnet ist, bzw. die aus dem Dichtmediumbehälter 37 Dichtmedium ansaugt. Der Antriebsmotor 31 treibt im gezeigten Ausführungsbeispiel gleichzeitig auch einen Lüfter 32 an. Dazu sind hier Lüfter 32 und Hydraulikpumpe 36 axial hintereinander angeordnet. Selbstverständlich könnte der Lüfter 32 auch separat angeordnet sein und einen eigenen Antriebsmotor aufweisen. Die Hydraulikpumpe 36 könnte auch außerhalb des Dichtmediumbehälters 37 angeordnet sein. Alle Komponenten des Hydraulikaggregats 12 sind in einem Aggregatgehäuse 30 angeordnet.

Die Hydraulikpumpe 36 saugt Dichtmedium aus dem Dichtmediumbehälter 37 an und fördert das Dichtmedium über eine Druckleitung 41 zu einer hydraulischen Steuereinheit 35, zur Steuerung des Drucks pₒᵢₗ des Dichtmediums und/oder des Volumenstroms des Dichtmediums. An die hydraulische Steuereinheit 35 ist die Dichtmediumleitung 13 angeschlossen. Ebenso kann an die hydraulische Steuereinheit 35 gegebenenfalls die Abführleitung 14 zur Rückführung des Dichtmediums aus der Dichtanordnung 10 angeschlossen sein, wofür von der hydraulischen Steuereinheit 35 eine Sumpfleitung 42 zurück in den Dichtmediumbehälter 37 führt. Die Abführleitung 14 kann aber auch direkt in den Dichtmediumbehälter 37 führen. Der Druck pₒᵢₗ des Dichtmediums kann daher auch durch Druckregelungseinrichtungen in der Abführleitung 14 eingestellt werden. Auf die hydraulische Steuereinheit 35 kann unter Umständen auch verzichtet werden. Die Drainageleitung 15 aus der Dichtanordnung 10 mündet im Dichtmediumbehälter 37.

Zur Kühlung des Dichtmediums im Dichtmediumbehälter 37 kann im Hydraulikaggregat 12 ein Wärmetauscher 33 vorgesehen sein, der vom ausgeblasenen Luftstrom des Lüfters 32 überströmt wird und durch den Dichtmedium durchgepumpt wird, wie in Fig.3 angedeutet. Dazu ist der Wärmetauscher 33 z.B. zwischen Lüfter 32 und Auslassschlitzen 34 im Aggregatgehäuse 30 angeordnet. Hierzu kann auch eine separate Hydraulikpumpe vorgesehen sein.

Der Dichtmediumbehälter 37 ist hier im unteren Teil des Hydraulikaggregats 12 angeordnet und durch ein Abtrennteil 38, z.B. ein Deckel, abgeschlossen. Am Abtrennteil 38 ist der Lüfter 32 und der Antriebsmotor 31 angeordnet. Am Abtrennteil 38 kann dazu ein Lüfterträger 43 vorgesehen sein, der am Abtrennteil 38 aufliegt und über den der Lüfter 32 am Abtrennteil 38 befestigt ist, z.B. mittels Schrauben. Durch das Abtrennteil 38 wird das Innere des Hydraulikaggregats 12, bzw. des Aggregatgehäuses 30, in den Dichtmediumbehälter 37, das teilweise mit Dichtmedium gefüllt ist, und in einen Lüfterraum 39, in dem zumindest der Lüfter 32 angeordnet ist, geteilt. Lüfterraum 39 und Dichtmediumbehälter 37 können aber natürlich auch örtlich getrennt sein und mit jeweils eigenen Gehäusen versehen sein.

Der Lüfter 32 saugt über Ansaugschlitze 40 Luft aus dem Lüfterraum 39 an und bläst die angesaugte Luft über Auslassschlitze 34, eventuell über den Wärmetauscher 33, nach außen aus. Im Abtrennteil 38 ist nun eine Ausnehmung 44, z.B. eine oder mehrere Bohrungen, vorgesehen. Damit saugt der Lüfter 32 nicht nur aus dem Lüfterraum 39 an, sondern zu einem gewissen Teil auch aus dem Dichtmediumbehälter 37, womit im freien Raum 45 des Dichtmediumbehälters 37 (der Raum, der nicht mit Dichtmedium ausgefüllt ist) ein Unterdruck entsteht. Im Falle getrennter Gehäuse für Lüfter 32 und Dichtmediumbehälter 37 wäre in diesem Fall der Dichtmediumbehälter 37 über die Ausnehmung und eine geeignete, daran anschließende Leitung mit dem Lüfterraum 39 verbunden. Dieser Unterdruck wird nun erfindungsgemäß genutzt, um das Kompressorgehäuse 2 mit Spülgas zu spülen, um die Konzentration von Arbeitsmedium im Kompressorgehäuse 2 unterhalb einer bestimmten Grenze zu halten. Die Spülung erfolgt dabei permanent, wenn der Lüfter 32 läuft, wobei im Hydraulikaggregat eine Steuerung für den Betrieb des Lüfters 32, z.B. basierend auf der Temperatur im Hydraulikaggregat oder der Temperatur des Dichtmediums, vorgesehen sein kann. Der Lüfter 32 kann aber auch permanent laufen oder an die Laufzeiten des Kolbenkompressors gekoppelt sein.

Dazu ist das Kompressorgehäuse 2, hier z.B. das Distanzstück 4, über eine Saugleitung 17 mit dem freien Raum 45 im Dichtmediumbehälter 37 und damit mit dem Unterdruck verbunden. Damit wird auch im Kompressorgehäuse 2, hier z.B. im Distanzstück 4, ein Unterdruck erzeugt. Im Kompressorgehäuse 2 ist eine Öffnung 16, z.B. in Form eines geeigneten Ventils, vorgesehen, das das Kompressorgehäuse 2 mit einem Spülgasreservoir 18, im einfachsten Fall mit der Umgebung des Kompressors, verbindet, sodass Spülgas, im einfachsten Fall Umgebungsluft, angesaugt wird. Auf diese Weise kann eine ausreichende Spülung des Kompressorgehäuses 2, oder eines Teiles davon (hier das Distanzstück 4), mit Spülgas sichergestellt werden. Die Spülmenge kann dabei durch Einstellung des Unterdruckes, z.B. durch entsprechende Dimensionierung der Ausnehmung 44 im Abtrennteil 38, eingestellt werden. Der im Hydraulikaggregat 12 vorhandene Lüfter 12 kann daher gleichzeitig zur permanenten Spülung des Kompressorgehäuses verwendet werden.

Die Ausnehmung 44 kann dabei vorzugsweise auch im Bereich des Lüfterträgers 43 angeordnet sein, wobei hierbei auch eine entsprechende Ausnehmung im Lüfterträger 43 vorgesehen ist, wie in Fig.3 angedeutet. Damit kann der freie Raum 45 im Dichtmediumbehälter 37 direkt mit dem Inneren des Lüfters 32 verbunden werden, womit eine besonders effektive Ansaugung aus dem Dichtmediumbehälter 37 erzielt werden kann.

Aufgrund der sehr geringen Drainagemengen von Dichtmedium, könnte anstelle einer eigenen Saugleitung 17 auch die Drainageleitung 15 zur Spülung des Kompressorgehäuses 2 verwendet werden, womit auf die Saugleitung 17 auch verzichtete werden kann. Dazu ist lediglich die Drainageleitung 15 mit dem Inneren des Kompressorgehäuses 2 zu verbinden bzw. ist die Drainageleitung 15 über die konstruktive Ausgestaltung der Dichtanordnung 10 ohnehin bereits mit dem Kompressorgehäuse 2 verbunden (was in der Regel der Fall sein wird).

Für den Betrieb des Kolbenkompressors 1 könnte auch vorgesehen sein, dass der Lüfter 32 vor dem Hochfahren des Kolbenkompressors 1 für eine bestimmte Zeitdauer betrieben wird, um das Kompressorgehäuse 2 zuerst zu spülen, bevor der Kolbenkompressor 1 angefahren wird.

Um die Betriebssicherheit des Kolbenkompressors weiter zu erhöhen, kann im Kompressorgehäuse 2 auch ein Gassensor angeordnet sein, um allfällige unzulässige Gaskonzentrationen von Arbeitsmedium, die z.B. bei einem Fehler des Spülsystems auftreten können, zu detektieren und den Kolbenkompressor gegebenenfalls abzuschalten oder eine Fehler- oder Warnmeldung auszugeben.

## Patentansprüche

1. Kolbenkompressor mit einer in einem Kompressorgehäuse (2) angeordneten Dichtanordnung (10) zur Abdichtung einer hin- und hergehenden Kolbenstange (7) des Kolbenkompressors (1) mit einem ersten und zweiten Dichtelement (22), die in einer Ausnehmung (20) der Dichtanordnung (10) axial beabstandet angeordnet sind, wobei eine Zuleitung (27) für ein Dichtmedium vorgesehen ist, die mit der Ausnehmung (20) verbunden ist und die Dichtelemente (22) durch das Dichtmedium druckbeaufschlagt sind, und wobei ein Hydraulikaggregat (12) zur Erzeugung des Drucks des Dichtmediums vorgesehen ist, **dadurch gekennzeichnet, dass** im Hydraulikaggregat (12) ein Lüfter (32) und ein Dichtmediumbehälter (37), der teilweise mit Dichtmedium gefüllt ist, vorgesehen sind, wobei der Lüfter (32) Luft aus dem freien Raum des Dichtmediumbehälters (37) ansaugt und **dass** der freie Raum (45) im Dichtmediumbehälter (37) über eine Leitung (15, 17) mit dem Kompressorgehäuse (2) verbunden ist und am Kompressorgehäuse (2) eine Öffnung (16) zum Verbinden des Inneren des Kompressorgehäuses (2) mit einem Spülgasreservoir (18) vorgesehen ist.

2. Kolbenkompressor nach Anspruch 1, **dadurch gekennzeichnet, dass** im Hydraulikaggregat (12) ein Lüfterraum (39) vorgesehen ist, in dem der Lüfter (12) angeordnet ist, und der Lüfterraum (39) mit dem freien Raum (45) im Dichtmediumbehälter (37) verbunden ist.

3. Kolbenkompressor nach Anspruch 1 oder 2, **dadurch gekennzeichnet, dass** der Dichtmediumbehälter (37) durch ein Abtrennteil (38) abgeschlossen ist und im Abtrennteil (38) eine Ausnehmung (44) angeordnet ist, über die der Lüfter (32) Luft aus dem Dichtmediumbehälter (37) ansaugt.

4. Kolbenkompressor nach Anspruch 1, **dadurch gekennzeichnet, dass** die Leitung als Drainageleitung (15) für Dichtmedium oder als separate Saugleitung (17) ausgeführt ist.

5. Kolbenkompressor nach Anspruch 1, **dadurch gekennzeichnet, dass** im Hydraulikaggregat (12) ein Wärmetauscher (33) angeordnet ist, durch den Dichtmedium aus dem Dichtmediumbehälter (37) umgewälzt wird und der vom vom Lüfter (32) ausgeblasenen Luftstrom überströmt wird.

6. Verfahren zum Spülen eines Kompressorgehäuses (2) eines Kolbenkompressors (1), in dem eine Dichtanordnung (10) zur Abdichtung einer hin- und hergehenden Kolbenstange (7) des Kolbenkompressors (1) angeordnet ist und die Dichtanordnung (10) über ein Hydraulikaggregat (12) mit unter Druck stehendem Dichtmedium versorgt wird und ein Lüfter (32) im Hydraulikaggregat (12) Luft aus dem Inneren eines Dichtmediumbehälters (37) ansaugt, wobei das Innere des Dichtmediumbehälters (37) mit dem Kompressorgehäuse (2) verbunden wird, sodass durch eine Öffnung (16) im Kompressorgehäuse (2) Spülgas angesaugt und damit das Kompressorgehäuse (2) gespült wird.

7. Verfahren nach Anspruch 6, **dadurch gekennzeichnet, dass** der Lüfter (32) vor dem Anfahren des Kolbenkompressors (1) für eine bestimmte Zeitdauer betrieben wird.

## Claims

1. A piston compressor comprising a sealing arrangement (10) arranged in a compressor housing (2) for sealing a reciprocating piston rod (7) of the piston compressor (1), the sealing arrangement having a first and a second sealing element (22) which are arranged axially spaced apart in a recess (20) of the sealing arrangement (10), wherein a feed line (27) for a sealing medium is provided, which feed line is connected to the recess (20), and the sealing elements (22) are pressurized by the sealing medium, and wherein a hydraulic unit (12) is provided for generating the pressure of the sealing medium, **characterized in that** a ventilator (32) and a sealing medium container (37), which is partially filled with sealing medium, are provided in the hydraulic unit (12), wherein the ventilator (32) suctions air from the free space of the sealing medium container (37), and that the free space (45) in the sealing medium container (37) is connected via a line (15, 17) to the compressor housing (2), and an opening (16) is provided at the compressor housing (2) for connecting the interior of the compressor housing (2) to a purge gas reservoir (18).

2. The piston compressor according to claim 1, **characterized in that** a ventilator chamber (39) is provided in the hydraulic unit (12), in which ventilator chamber the ventilator (12) is arranged and the ventilator chamber (39) is connected to the free space (45) in the sealing medium container (37).

3. The piston compressor according to claim 1 or claim 2, **characterized in that** the sealing medium container (37) is closed by a separating part (38), and a recess (44) is arranged in the separating part (38), via which recess the ventilator (32) suctions air from the sealing medium container (37).

4. The piston compressor according to claim 1, **characterized in that** the line is implemented as a drainage line (15) for sealing medium or as a separate suction line (17).

5. The piston compressor according to claim 1, **characterized in that** a heat exchanger (33) is arranged in the hydraulic unit (12), through which heat exchanger the sealing medium from the sealing medium container (37) is circulated and over which the air flow flows that is blown out by the ventilator (32).

6. A method for purging a compressor housing (2) of a piston compressor (1) in which a sealing arrangement (10) for sealing a reciprocating piston rod (7) of the piston compressor (1) is arranged, and the sealing arrangement (10) is supplied with pressurized sealing medium via a hydraulic unit (12), and a ventilator (32) in the hydraulic unit (12) suctions air from the interior of a sealing medium container (37), wherein the interior of the sealing medium container (37) is connected to the compressor housing (2) so that purge gas is suctioned through an opening (16) in the compressor housing (2) and the compressor housing (2) is purged therewith.

7. The method according to claim 6, **characterized in that** the ventilator (32) is operated for a given time period prior to the startup of the piston compressor (1).

## Revendications

1. Compresseur à piston comportant un dispositif d'étanchéité (10) disposé dans un boîtier de compresseur (2) et servant à réaliser l'étanchéité d'une tige de piston à mouvement alternatif (7) du compresseur à piston (1) au moyen de premier et second éléments d'étanchéité (22) qui sont disposés dans un évidement (20) du dispositif d'étanchéité (10) en étant espacés axialement, un conduit (27) d'alimentation en milieu d'étanchéité étant prévu qui est relié à l'évidement (20) et les éléments d'étanchéité (22) étant soumis à une pression par le milieu d'étanchéité, et une unité hydraulique (12) étant prévue pour générer la pression du milieu d'étanchéité, **caractérisé en ce que** dans l'unité hydraulique (12) sont disposés un ventilateur (32) et un réservoir de milieu d'étanchéité (37) qui est partiellement rempli d'un milieu d'étanchéité, le ventilateur (32) aspirant l'air se trouvant dans l'espace libre du réservoir de milieu d'étanchéité (37) et **en ce que** l'espace libre (45) se trouvant dans le réservoir de milieu d'étanchéité (37) est relié par le biais d'un conduit (15, 17) au boîtier de compresseur (2) et un orifice (16) est ménagé au niveau du boîtier de compresseur (2) pour relier l'intérieur du boîtier de compresseur (2) à un réservoir de gaz de balayage (18).

2. Compresseur à piston selon la revendication 1, **caractérisé en ce qu'**il est prévu dans l'unité hydraulique (12) un compartiment de ventilateur (39) dans lequel le ventilateur (12) est disposé et le compartiment de ventilateur (39) est relié à l'espace libre (45) dans le récipient de milieu d'étanchéité (37).

3. Compresseur à piston selon la revendication 1 ou 2, **caractérisé en ce que** le réservoir de milieu d'étanchéité (37) est fermé par un élément de séparation (38) et l'élément de séparation (38) comporte un évidement (44) qui permet au ventilateur (32) d'aspirer l'air du réservoir de milieu d'étanchéité (37).

4. Compresseur à piston selon la revendication 1, **caractérisé en ce que** le conduit est réalisé sous la forme d'un conduit (15) de drainage du milieu d'étanchéité ou d'un conduit d'aspiration (17) séparé.

5. Compresseur à piston selon la revendication 1, **caractérisé en ce que** dans l'unité hydraulique (12) est disposé un échangeur de chaleur (33) qui permet de mettre en circulation le milieu d'étanchéité depuis le réservoir de milieu d'étanchéité (37) et de faire circuler le flux soufflé par le ventilateur (32).

6. Procédé de balayage d'un boîtier de compresseur (2) d'un compresseur à piston (1) dans lequel est disposé un dispositif d'étanchéité (10) servant à réaliser l'étanchéité d'une tige de piston à mouvement alternatif (7) du compresseur à piston (1), dans lequel le dispositif d'étanchéité (10) est alimenté par le biais d'une unité hydraulique (12) en milieu d'étanchéité sous pression et dans lequel un ventilateur (32) disposé dans l'unité hydraulique (12) aspire de l'air à l'intérieur d'un réservoir de milieu d'étanchéité (37), l'intérieur du réservoir de milieu d'étanchéité (37) étant relié au boîtier de compresseur (2) de façon à aspirer du gaz de balayage par un orifice (16) ménagé dans le boîtier de compresseur (2) et à balayer le boîtier de compresseur (2) avec ledit gaz.

7. Procédé selon la revendication 6, **caractérisé en ce que** le ventilateur (32) est actionné pendant un certain temps avant le démarrage du compresseur à piston (1).
